# EUROPEAN PATENT APPLICATION

(11) **EP 4 643 622 A1**
(43) Date of publication of application: **05.11.2025**
(21) Application number: 23911441.6
(22) Date of filing: 17.11.2023
(51) Int. Cl.: A01B 69/00, G05D 1/43

(54) **WORK VEHICLE**

(30) Priority: 26.12.2022 JP 2022208190
(71) Applicant: Kubota Corporation, Osaka 556-8601 (JP)
(72) Inventor: MURATA, Yusuke, Sakai-shi, Osaka 590-0908 (JP); KITAJIMA, Toshihiro, Sakai-shi, Osaka 590-0908 (JP)
(74) Representative: Cabinet Beau de Loménie
(86) International application number: PCT/JP2023/041522
(87) International publication number: WO 2024/142659

(57) **Abstract**

A work vehicle 10 includes: a vehicle body 11; a detection device configured to detect an obstacle around the vehicle body 11; a discrimination processor configured to discriminate a type of a detection target based on a detection result by the detection device; and a travel controller configured to enable travel stop of the vehicle body or avoidance travel in which the vehicle body travels around the detection target according to the type of the detection target. The travel controller performs, in a case where the detection target is an animal other than a human, avoidance travel with an avoidance distance between the detection target and a start position of the avoidance travel smaller than that in a case where the detection target is a human.

## Description

### TECHNICAL FIELD

The present invention relates to a work vehicle. The present application claims priority based on Japanese Patent Application No. 2022-208190 filed on December 26, 2022, the entire contents of which are incorporated herein by reference.

### BACKGROUND ART

It is demanded that a work vehicle has various safety functions. PATENT LITERATURE 1 discloses a work vehicle having a function of notifying surroundings that work is being performed. The work vehicle includes a sensor that detects an object located around the work radius, and a warning unit that outputs a warning sound or announcement.

### CITATION LIST

### [PATENT LITERATURE]

PATENT LITERATURE 1: Korean Registered Patent No. 10-2087714

### SUMMARY OF THE INVENTION

A work vehicle according to an aspect of the present disclosure includes: a vehicle body; a detection device configured to detect an obstacle around the vehicle body; a discrimination processor configured to discriminate a type of a detection target based on a detection result by the detection device; and a travel controller configured to enable travel stop of the vehicle body or avoidance travel in which the vehicle body travels around the detection target according to the type of the detection target, and the travel controller performs, in a case where the detection target is an animal other than a human, avoidance travel with an avoidance distance between the detection target and a start position of the avoidance travel smaller than that in a case where the detection target is a human.

### BRIEF DESCRIPTION OF DRAWINGS

FIG. 1 is a side view illustrating an aspect of a work vehicle.
FIG. 2 is a block diagram illustrating a system configuration of the work vehicle.
FIG. 3 is an explanatory diagram illustrating a state in which the work vehicle travels on a road outside a farm field by self-driving.
FIG. 4 is an explanatory diagram of a target route in a case where self-driving is performed in the farm field.
FIG. 5 is a flowchart illustrating an example of control for self-driving.
FIG. 6 is an explanatory diagram of the work vehicle traveling by self-driving.
FIG. 7 is a flowchart for describing a case where avoidance travel intervenes in the middle of driving of the work vehicle.
FIG. 8 is a flowchart for describing avoidance travel including an alarming operation.
FIG. 9 is a flowchart for describing avoidance travel accompanied by deceleration driving.
FIG. 10 is an image diagram of map information when the avoidance travel is performed in the middle of the target route.

### DETAILED DESCRIPTION

### <Problems to be Solved by Present Disclosure>

For example, a work vehicle that performs agricultural work travels on a farm road (road) leading to a farm field that is a workplace, in addition to performing work such as tilling or harvesting of crops while traveling in the farm field. Such a work vehicle may perform manual driving by the driver's operation, and may also perform self-driving not by a driver's operation or remote driving. For example, in the case of self-driving, when there is an obstacle around the vehicle body, driving control is performed so as to perform avoidance travel of causing the vehicle body to travel around the obstacle for safety.

Animals such as birds may be present in the farm field and farm road where the work vehicle travels, and the number of animals may be more than one. If the work vehicle uniformly performs the avoidance travel every time an animal is detected as an obstacle, the work vehicle cannot travel on a target route, work efficiency is reduced, and driving control becomes complicated.

In addition, for example, a bird may not escape even if a work vehicle approaches to some extent, and may escape only when the work vehicle is very close to the bird. For this reason, if the work vehicle detects a bird around the work vehicle and starts avoidance travel in advance, the avoidance travel may be wasted.

Therefore, the present disclosure provides a work vehicle capable of avoidance travel in which the work vehicle travels around an obstacle, and capable of reducing waste traveling.

### <Effects of the Present Disclosure>

According to the work vehicle of the present disclosure, avoidance travel in which the work vehicle travels around an obstacle is possible, and waste travel can be reduced.

### <Outline of Embodiment of Present Disclosure>

Hereinafter, outlines of an embodiment of the present disclosure will be listed and described.
(1) A work vehicle according to the present embodiment includes: a vehicle body; a detection device configured to detect an obstacle around the vehicle body; a discrimination processor configured to discriminate a type of a detection target based on a detection result by the detection device; and a travel controller configured to enable travel stop of the vehicle body or avoidance travel in which the vehicle body travels around the detection target according to the type of the detection target, and the travel controller performs, in a case where the detection target is an animal other than a human, avoidance travel with an avoidance distance between the detection target and a start position of the avoidance travel smaller than that in a case where the detection target is a human.
   According to the work vehicle of the present embodiment, the timing of starting the avoidance travel is changed according to the detection target. That is, animals other than a human may not escape even when the work vehicle approaches to some extent, and may escape only when the work vehicle reaches the immediate vicinity. The work vehicle performs avoidance travel in accordance with such animal habit. As a result, waste travel can be reduced.
(2) It is preferable that the discrimination processor be capable of discriminating, as a type of a detection target, a static object that does not perform avoidance behavior by itself, and the travel controller perform, in a case where the detection target is an animal other than a human, avoidance travel with the avoidance distance smaller than that in a case where the detection target is the static object.
   According to the configuration, in a case where the detection target is a static object, interference with the static object can be prevented by avoidance travel. As described above, an animal other than a human may escape (avoidance behavior) only after the work vehicle reaches the immediate vicinity, and relatively quickly escape. Therefore, in a case where the detection target is an animal other than a human, it is possible to prevent interference with the animal even by avoidance travel for a small avoidance distance.
(3) It is preferable that the discrimination processor be capable of discriminating, as a type of a detection target, a device capable of performing avoidance behavior by itself, and the travel controller perform, in a case where the detection target is an animal other than a human, avoidance travel with the avoidance distance smaller than that in a case where the detection target is the device.

Even if the device can perform the avoidance behavior by itself, it is not always possible to immediately achieve the avoidance behavior. Therefore, according to the configuration, in a case where the detection target is the device, the avoidance distance is larger than that in a case where the detection target is an animal other than a human, and it is possible to prevent interference with the device.

On the other hand, an animal other than a human may escape (avoidance behavior) only after the work vehicle reaches the immediate vicinity, and relatively quickly escape as described above. Therefore, in a case where the detection target is an animal other than a human, it is possible to prevent interference with the animal even by avoidance travel for a small avoidance distance.

(4) Agility, a method of avoidance, and the like vary depending on the type of animal. Therefore, in the work vehicle according to any one of (1) to (3), it is preferable that the discrimination processor be capable of discriminating, as a type of a detection target, a type of an animal other than a human, and the travel controller perform different types of avoidance travel according to a type of an animal.

According to the configuration, avoidance travel suitable for the type of the animal is performed.

(5) Birds can fly off and escape quickly. Therefore, in the work vehicle of (4), it is preferable that the discrimination processor be capable of discriminating, as a type of a detection target, a bird, and the travel controller perform, in a case where the detection target is a bird, avoidance travel with the avoidance distance smaller than that in a case where the detection target is other than a bird.

According to the configuration, avoidance travel suitable for a bird is performed.

(6) It is preferable that the work vehicle according to any one of (1) to (5) further include an alarming device capable of performing an alarming operation according to a type of the detection target.

According to the configuration, the alarming operation can cause a human and an animal other than a human to evacuate, and there are more chances that the avoidance travel does not need to be performed. Note that generation of sound or ultrasonic waves and light emission are exemplified as the alarming operation.

(7) It is preferable that the work vehicle according to (6) further include a behavior detector configured to detect behavior of the detection target based on a detection result by the detection device, and the behavior detector stop one or both of the avoidance travel and the alarming operation when behavior of the detection target moving away from the vehicle body is detected.

According to the configuration, unnecessary avoidance travel and alarming operation may be eliminated.

(8) In the work vehicle of (6) or (7), it is preferable that after the alarming device performs the alarming operation, the travel controller perform the avoidance travel.

According to the configuration, in a case where the detection target is an animal, the alarming operation is first performed. The avoidance travel can be performed only if the alarm still does not cause the animal to escape. Waste avoidance travel of the vehicle body can be reduced.

(9) In the work vehicle according to any one of (1) to (8), it is preferable that the travel controller enable deceleration driving of the vehicle body according to a type of the detection target, and in a case where the detection target is an animal other than a human, a traveling speed after deceleration be higher or a deceleration be smaller than that in a case where the detection target is a human.

As described above, an animal other than a human may escape only after the work vehicle reaches the immediate vicinity, and relatively quickly escape. Therefore, according to the configuration, in a case where the detection target is an animal other than a human, it is possible to prevent interference with the animal without greatly decelerating the vehicle body.

### <Details of Embodiment of Present Disclosure>

Hereinafter, the embodiment of the present disclosure will be described in detail with reference to the drawings. Note that at least some of the embodiments described below may be arbitrarily combined.

### [Work Vehicle]

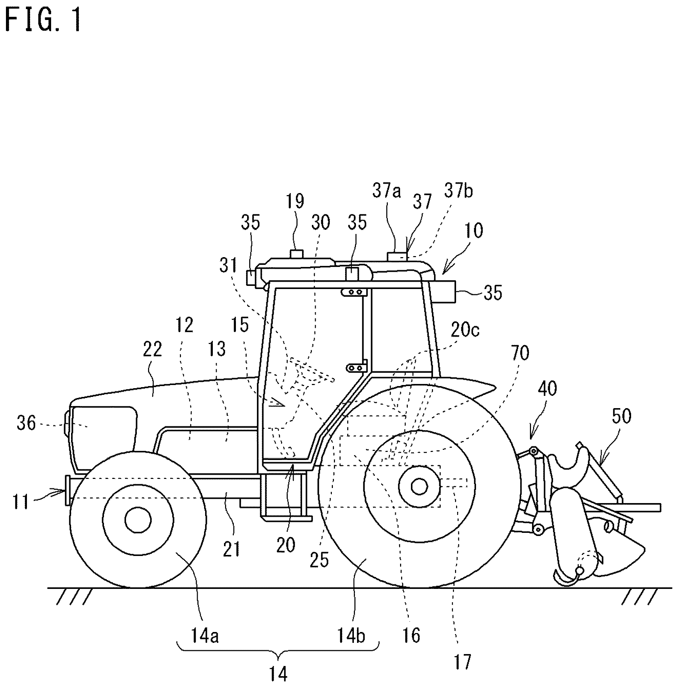

FIG. 1 is a side view illustrating an aspect of a work vehicle. A work vehicle 10 illustrated in FIG. 1 is a tractor, and is a vehicle that can be used to perform agricultural work. FIG. 1 illustrates a tractor to which an implement 50 is coupled. The technique of the present disclosure is applicable not only to a tractor but also to other types of work vehicle. For example, the work vehicle may be a harvester, a rice transplanter, a vehicle for crop management, a vegetable transplanter, a mower, a seeder, a spreader, or the like.

The work vehicle 10 according to the present embodiment functions in both a manual driving mode, in which the work vehicle 10 is operated by a driver, and a self-driving mode, in which the work vehicle 10 performs unmanned driving. The work vehicle 10 can perform self-driving and manual driving both inside the farm field and on a road (farm road) outside the farm field.

The manual driving is driving in which an operation (including traveling) of the work vehicle 10 is performed by a manual operation by a driver seated on a driver's seat 20 included in the work vehicle 10.

The self-driving is driving for operation (including traveling) of the work vehicle 10 performed by the function of the controller 70 of the work vehicle 10 without the manual operation by a driver.

The self-driving may be performed not only in an unmanned state where a driver is not seated on the driver's seat 20 but also in a manned state where a driver is seated on the driver's seat 20.

The self-driving is realized by a function of the controller 70 (a control unit 73 for driving control to be described later). The controller 70 can control at least one of steering, adjustment of a moving speed, and start and stop of movement necessary for movement of the work vehicle 10.

In the case of self-driving, in addition to the traveling control of the work vehicle 10, the operation control of the implement 50 is also performed without being operated by a driver. That is, while the work vehicle 10 automatically travels, the work is automatically performed by the implement 50.

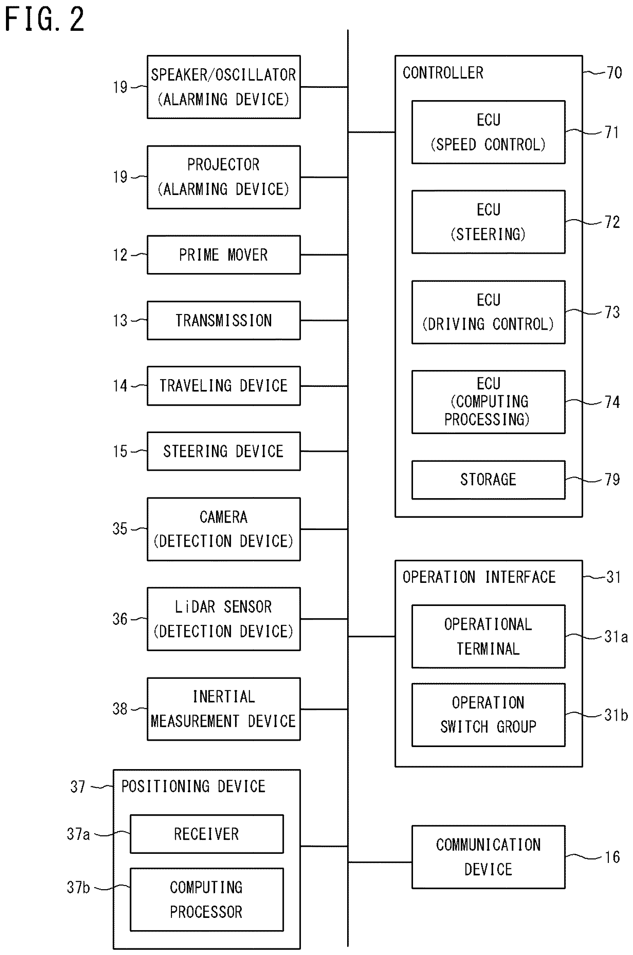

As will be described later, the work vehicle 10 includes a positioning device 37 including a GNSS receiver. The controller 70 (a control unit 73 for driving control to be described later) causes the work vehicle 10 to automatically travel based on the position of the work vehicle 10 identified by the positioning device 37 and a target route previously stored in a storage 79 (see FIG. 2).

The self-driving also includes autonomous travelling, while sensing the surrounding environment by a detection device to be described later without involvement of a person in the control of the movement of the work vehicle 10.

The self-driving includes not only moving of the work vehicle 10 toward a destination along a predetermined route (target route) but also moving following a tracking target.

During such self-driving, as will be described later, avoidance travel is performed as an operation to detect and avoid obstacles.

The work vehicle 10 can also be driven by a remote operation by a person other than a driver seated on the driver's seat 20. For this purpose, the work vehicle 10 includes a communication device 16 (see FIG. 2). The work vehicle 10 is remotely operated by using wireless communication between the work vehicle 10 and a management computer in the management office (not illustrated). Note that, during the remote control, on the driver's seat 20, no person may be seated or a person may be seated. The remote operation may be prioritized over the manual operation.

The direction of the work vehicle 10 is defined below. The work vehicle 10 includes a driver's seat 20. Front and rear, left and right, and upper and lower sides of the work vehicle 10 are defined with reference to a driver seated on a seat 20c of the driver's seat 20. That is, the front direction of the driver is "front", and the rear direction thereof is "rear". The right direction of the driver is "right", and the left direction thereof is "left". The front-rear direction and the left-right direction are parallel to the ground, and the front-rear direction and the left-right direction are orthogonal to each other. The vertical direction is orthogonal to both the front-rear direction and the left-right direction. The left-right direction may be referred to as a "vehicle width direction". The front direction is the "traveling direction" of the work vehicle 10.

The work vehicle 10 may not necessarily have the driver's seat 20. In this case, the work traveling direction of the work vehicle 10 is "front", and the direction opposite to the work traveling direction is "rear". The right direction of the work vehicle 10 when facing the work traveling direction is "right", and the left direction thereof is "left".

The work vehicle 10 includes a vehicle body 11, a prime mover 12, a transmission 13, a traveling device 14, a steering device 15, a linkage device 40, and the controller 70.

The vehicle body 11 includes a chassis 21 serving as a frame of the vehicle, a body 22 serving as an exterior, and the driver's seat 20. The driver's seat 20 is provided with a steering wheel 30 operated by a driver, and an operation unit (operation interface) 31 including an operation terminal and an operation switch group operated by a driver.

The prime mover 12 is an engine or a motor, and is a diesel engine in the present embodiment.

The traveling device 14 includes front wheels 14a and rear wheels 14b as wheels. The rotational force of the prime mover 12 is shifted by the transmission 13, and the rotational force is transmitted to the wheels, so that the work vehicle 10 travels. In a case where the work vehicle 10 travels in a farm field to perform work, the traveling device 14 may include crawlers as one or both of the front wheels and the rear wheels.

The steering device 15 includes a steering shaft 25 rotated by the steering wheel 30. The steering device 15 changes the rolling direction of the wheels (front wheels 14a) to change the traveling direction of the work vehicle 10. The steering device 15 includes an assist mechanism (power steering device). The assist mechanism assists the operation force of the steering wheel 30 by the driver by hydraulic pressure or electric power. In the case of self-driving, steering is performed by the assist mechanism, and the traveling direction is changed.

The transmission 13 includes a plurality of gears and the like. The transmission 13 changes the propulsion and the moving speed of the work vehicle 10. The transmission 13 can also switch between forward travel and rearward travel of the work vehicle 10.

The work vehicle 10 includes a power take-off mechanism (hereinafter, referred to as a "PTO mechanism"). In the present embodiment, the transmission 13 includes a PTO mechanism. The PTO mechanism includes a PTO shaft 17 as one of output shafts of the transmission 13. The motive power of the prime mover 12 rotates the PTO shaft 17. Various driving units included in the implement 50 are operated by the rotational force of the PTO shaft 17. The PTO shaft 17 serves as an output shaft for operating the implement 50.

The linkage device 40 links the implement 50 to the vehicle body 11. The linkage device 40 is mounted on a rear part of the vehicle body 11 (chassis 21). The linkage device 40 includes a lifting link mechanism that supports the implement 50 so as to be movable up and down. The lifting link mechanism is configured by, for example, a three-point link mechanism. The implement 50 is detachable from the work vehicle 10 by the linkage device 40. The lifting link mechanism changes a height position of the implement 50 or changes the posture of the implement 50 by an actuator such as a hydraulic device.

The implement 50 illustrated in FIG. 1 is a rotary tiller. The implement 50 is not limited to a rotary tiller, and may be, for example, a seeder, a spreader, a transplanter, a mower, a rake, a baler, a harvester, or the like. The linkage device 40 connects the desired implement 50 to the work vehicle 10. The work vehicle 10 causes the implement 50 to perform predetermined work while pulling the implement 50. The linkage device 40 may be provided at the front part of the vehicle body 11.

The work vehicle 10 includes imagers. The imagers of the present embodiment are cameras 35. The cameras 35 are provided, for example, at the front, rear, left, and right of the work vehicle 10, and capture images of the surrounding environment of the work vehicle 10. The cameras 35 are, for example, CCD cameras including CCD image sensors or CMOS cameras including CMOS image sensors. The cameras 35 include a processing circuit that processes signals output from the image sensors, and the processing circuit acquires surrounding image information.

When the work vehicle 10 travels on a road or a farm field, the cameras 35 are used not only for recognizing white lines, signs, displays, or the like, but also for recognizing surrounding obstacles.

The cameras 35 may be either or both of visible cameras that generate visible light images and infrared cameras that generate infrared images. Infrared cameras make it easy to detect an object (obstacle) at night.

Image information acquired by the cameras 35 is transmitted to the controller 70. The image information is used not only for self-driving control but also for manual driving. As will be described later, by using the image information together with other information (sensor data to be described later), the controller 70 can detect obstacles around the work vehicle 10 and cause the work vehicle 10 to perform avoidance travel against the obstacles.

The work vehicle 10 includes a three-dimensional range sensor. The three-dimensional range sensor of the present embodiment is a light detection and ranging (LiDAR) sensor 36. The LiDAR sensor 36 is disposed, for example, at the lower part of the front surface of the vehicle body 11. The LiDAR sensor 36 may be disposed at another position. The LiDAR sensor 36 acquires and outputs sensor data indicating a distance and a direction between measurement points on objects existing in the surroundings and sensor data indicating a two-dimensional or three-dimensional coordinate values of the measurement points on objects existing in the surroundings. The sensor data acquired by the LiDAR sensor 36 is transmitted to the controller 70.

The sensor data from the LiDAR sensor 36 is used to detect surrounding obstacles. By using the sensor data together with other information (the image information), the controller 70 can detect obstacles around the work vehicle 10 and cause the work vehicle 10 to travel avoiding the obstacles.

The cameras 35 and the LiDAR sensor 36 function as obstacle sensors (detection devices) that detect surrounding obstacles.

The sensor data from the LiDAR sensor 36 may be also used for other purposes. The controller 70 can perform an environment map generation processing utilizing an algorithm such as simultaneous localization and mapping (SLAM) based on the sensor data. The environment map generation processing may be performed by a computer that is, for example, an external management device capable of communicating with the work vehicle 10.

The work vehicle 10 includes a positioning device 37. The positioning device 37 receives satellite signals transmitted from a plurality of GNSS satellites, and performs positioning based on the satellite signals. The GNSS is a general term for satellite positioning systems including a global positioning system (GPS), a quasi-zenith satellite system (QZSS), such as "Michibiki", GLONASS (Russia), Galileo (Europe), and BeiDou (China).

The positioning device 37 includes a receiver 37a that receives satellite signals and a processor (computing processor) 37b. The receiver 37a includes an antenna that receives signals from a GNSS satellite. The processor 37b calculates the position (coordinates) of the work vehicle 10 based on signals received by the antenna. The receiver 37a is disposed above the driver's seat 20, for example. Information indicating the position of the work vehicle 10 is transmitted to the controller 70 and used for self-driving or the like.

The positioning device 37 corrects or complements the position information of the work vehicle 10 based on the satellite signals utilizing the data acquired by the cameras 35 and the LiDAR sensor 36. The position of the work vehicle 10 is identified with a higher accuracy.

The work vehicle 10 includes an inertial measurement device 38. The inertial measurement device 38 includes a triaxial gyro sensor and a three-directional acceleration sensor. The inertial measurement device 38 detects an inclination and an operation of the work vehicle 10. Signals acquired by the inertial measurement device 38 are transmitted to the controller 70. Detection signals from the inertial measurement device 38 are used to complement the position information of the work vehicle 10. Accordingly, the positioning accuracy is improved.

The work vehicle 10 includes an alarming device 19. The alarming device 19 is a device that issues an alarm to animals around the work vehicle 10. The alarming device 19 includes, for example, a speaker or a buzzer that generates sound, an oscillator that generates ultrasonic waves, a projector that emits light, and the like. The work vehicle 10 may include one or more of a speaker, a buzzer, an oscillator, and an illumination device. An alarming operation such as sound generation by the alarming device 19 is controlled by the controller 70 (for example, the control unit 74 for computing processing). The light emission as an alarming operation is effective at night.

### [System Configuration of Work Vehicle 10]

FIG. 2 is a block diagram illustrating a system configuration of the work vehicle 10.

The controller 70 includes a control unit (computer) including a processor (computing processing device) and a memory including a RAM, a ROM, and the like. The processor reads a computer program from the memory and executes the computer program to perform the functions of the controller 70. The controller 70 may be configured by one control unit (electronic control unit: ECU) or may be configured by a plurality of control units. In a case where the controller 70 includes a plurality of control units, information communication can be performed between the control units.

In the present embodiment, the controller 70 includes a control unit 71 for speed control, a control unit 72 for steering, a control unit 73 for driving control, and a control unit 74 for computing processing. The control unit 73 for driving control is hereinafter referred to as a driving control unit 73. The control unit 74 for computing processing is referred to as a computing processing unit 74.

The controller 70 includes the storage (storage unit) 79 including a nonvolatile memory or the like that stores various types of information. Various computer programs for causing the control unit to function are stored in the storage 79. The storage 79 stores map information that can be used for self-driving, a trained model to be described later, a database, and the like.

The control unit 71 for speed control provides generated drive signals to the prime mover 12, the transmission 13, and the brake device to perform control such as adjustment of the traveling speed and stop of the work vehicle 10.

The control unit 72 for steering provides generated steering signals to the steering device 15. The control unit 72 controls a hydraulic device or an electric motor included in the assist mechanism of the steering device 15 based on measurement values by a rotation sensor of the steering shaft 25 to control steering of the work vehicle 10.

### [Driving Control Unit 73]

The driving control unit 73 performs overall control related to traveling including self-traveling of the work vehicle 10. The control by the driving control unit 73 may be realized by cooperation of the control unit 71 for speed control and the control unit 72 for steering. The driving control unit 73 can perform control related to each of self-driving, remote driving, and manual driving.

The driving control unit 73 can also perform control for avoidance travel, in which the vehicle body 11 travels around an obstacle existing around the work vehicle 10 or control for travel stop of the vehicle body 11 due to the obstacle. The driving control unit 73 causes the avoidance travel and the traveling stop to intervene in the middle of any one of the self-driving, the remote driving, and the manual driving. In a specific example described later, a case where avoidance travel intervenes in the self-driving will be mainly described.

As a specific example will be described later, the type of an obstacle as a detection target is identified based on the detection result by the cameras 35 or the like included in the work vehicle 10. The avoidance travel and the travel stop are performed according to the type of the detection target. When it is determined that the interference with the obstacle that is a detection target cannot be avoided even if the avoidance travel is performed, the driving control unit 73 stops the travel of the vehicle body 11.

As described above, the driving control unit 73 has a function as a travel controller that can selectively perform travel stop of the vehicle body 11 or avoidance travel in which the vehicle body 11 travels around the detection target according to the type of the detection target.

### [Computing Processing Unit 74]

The computing processing unit 74 detects an obstacle around the vehicle body 11 based on a detection result by a detection device including one or both of the cameras 35 and the LiDAR sensor 36. The computing processing unit 74 discriminates the type of the obstacle as a detection target based on the detection result. This discrimination is performed using, for example, a trained model. Therefore, machine learning using a data set including information on a detection result of a detection target by the detection device and types of detection targets (labels) is performed in advance. A trained model to which the information of the detection result is input and that outputs the type of the detection target is generated. The trained model is stored in the storage 79.

The computing processing unit 74 can discriminate between a human and a non-human animal other than a human as the type of the detection target. The computing processing unit 74 can discriminate, as the type of a detection target, a static object such as a plant or an artificial pillar that does not perform avoidance behavior by itself. The computing processing unit 74 can discriminate, as the type of a detection target, a device capable of performing an avoidance behavior (evacuation behavior) by itself, such as another agricultural machine, an unmanned robot, or an automobile.

The computing processing unit 74 can discriminate a non-human animal, and can discriminate the type of the animal. For example, the computing processing unit 74 can discriminate between the types of the animals such as a bird, a dog, a weasel, a wild boar, deer, and the like. Another trained model may be used for animal type discrimination.

As described above, the computing processing unit 74 has a function as a discrimination processor that discriminates the type of a detection target (obstacle) based on the detection result by the detection device such as the cameras 35.

The computing processing unit 74 can further detect the behavior of the detection target based on the detection result by the detection device such as the cameras 35. In a case where the detection target is an animal, the animal performs an operation of evacuating from (avoiding) the work vehicle 10. The computing processing unit 74 determines whether the detection target such as an animal moves based on one or both of the image information captured by the cameras 35 and the sensor data from the LiDAR sensor. The computing processing unit 74 can determine whether the detection target moves and also determine the direction of movement. That is, it is possible to determine that the detection target is moving in a direction away from the work vehicle 10.

As described above, the computing processing unit 74 has a function as a behavior detector that detects the behavior of the detection target.

Note that the discrimination processor and the behavior detector may be implemented by different control units.

### [Self-Driving of Work Vehicle 10]

The work vehicle 10 requires a target route for self-driving. The target route is generated before the self-driving is started. The target route is generated by a control unit of the controller 70 included in the work vehicle 10. Alternatively, a computer of a management device other than the work vehicle 10 may generate the target route. In this case, the work vehicle 10 acquires information on the target route through the communication device 16.

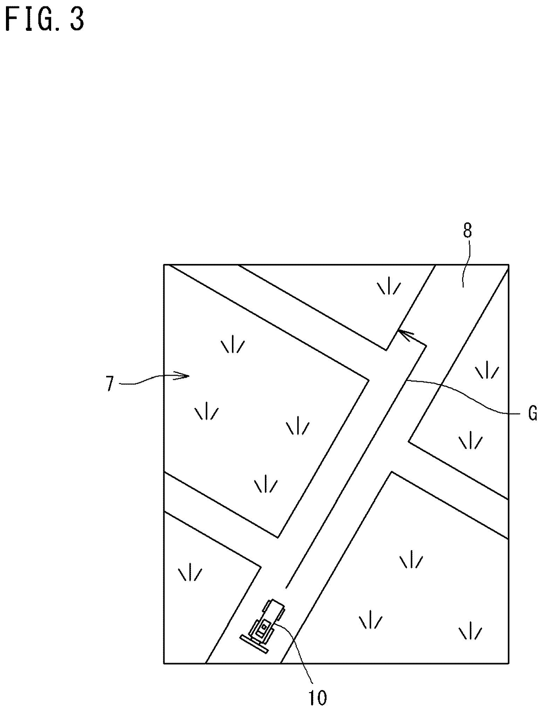

FIG. 3 is an explanatory diagram illustrating a state in which the work vehicle 10 travels on the road 8 outside the farm field 7 by self-driving. When the work vehicle 10 travels on the road 8 by self-driving, the work vehicle 10 requires information of the environmental map. The environmental map is map information of an environment where the work vehicle 10 moves, and includes map information of farm fields 7, roads 8 for the work vehicle 10 to move between the farm fields 7, and the like. A target route G is generated based on the map information. That is, when the destination of arrival is set in the map information, a route from the current position of the work vehicle 10 to the destination is generated as the target route G. In the case of FIG. 3, the target route G along the road 8 is generated. The information of the target route G is stored in the storage 79 together with the map information.

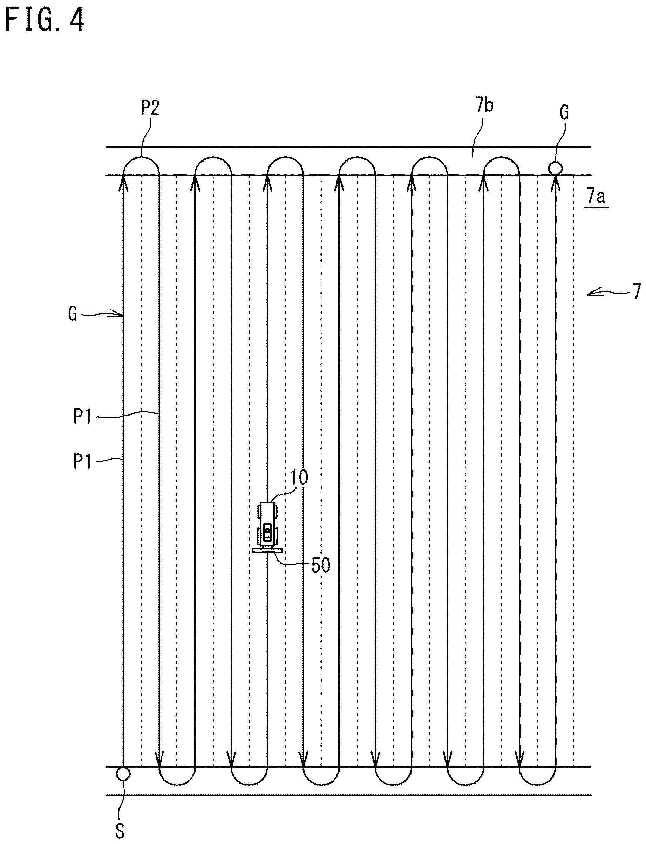

FIG. 4 is an explanatory diagram of a target route G in a case where self-driving is performed in the farm field 7. The farm field 7 includes a work area 7a in which the work vehicle 10 performs work and a headland 7b that is close to an outer peripheral edge of the farm field 7. Which areas in the farm field 7 correspond to the work area 7a or the headland 7b are set by a user.

The target route G in the farm field 7 includes a plurality of parallel main routes P1 and turning routes P2 each connecting two of the main routes P1. The main routes P1 are located in the work area 7a, and the turning routes P2 are located in the headland 7b. Although the main routes P1 illustrated in FIG. 4 are linear, the main routes P1 may include a curved portion.

An interval between broken lines in FIG. 4 represents a working breadth of the implement 50. The working breadth is set in advance and stored in the storage 79. The working breadth is input to the controller 70 when the user operates the operation unit 31 including the operation terminal. The working breadth may be automatically recognized when the implement 50 is connected to the work vehicle 10 and input to the controller 70. The interval between the adjacent main routes P1 is set in accordance with the working breadth.

The target route G is created so as to travel (cover) the entire work area 7a. The work vehicle 10 automatically travels along the target route G from the work start point S to the work end point G while repeating reciprocating travel. The target route G illustrated in FIG. 4 is an example.

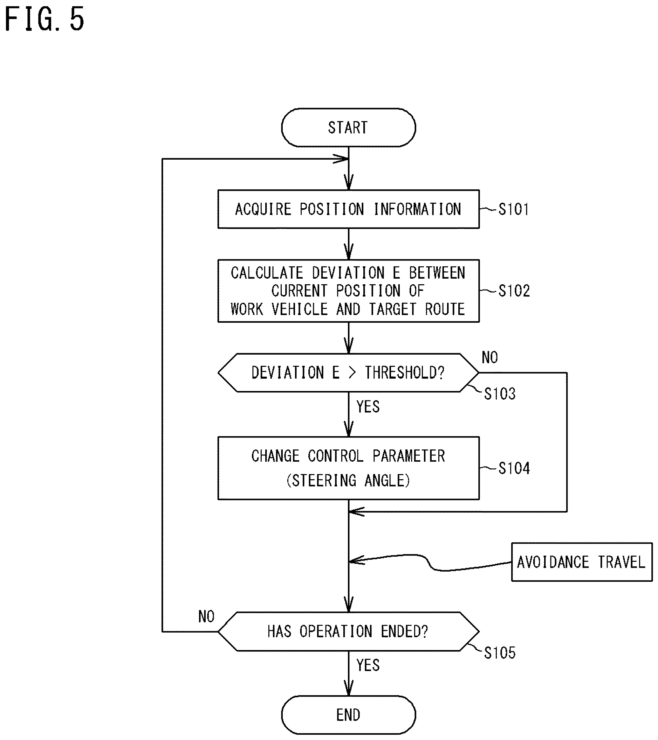

When the target route G for the outside of the farm field 7 or the inside of the farm field 7 is generated, self-driving becomes possible. FIG. 5 is a flowchart illustrating an example of control for self-driving.

The driving control unit 73 performs self-steering by performing processing of steps S101 to S105 illustrated in FIG. 5 while the work vehicle 10 travels. The traveling speed of the work vehicle 10 is maintained at a preset value, but may be automatically changed during the travel.

The driving control unit 73 acquires position information of the work vehicle 10 acquired by the positioning device 37 during the travel of the work vehicle 10 (step S101). The position information is information indicating the current position of the work vehicle 10. The driving control unit 73 obtains a deviation E between the current position of the work vehicle 10 and the target route G (step S102).

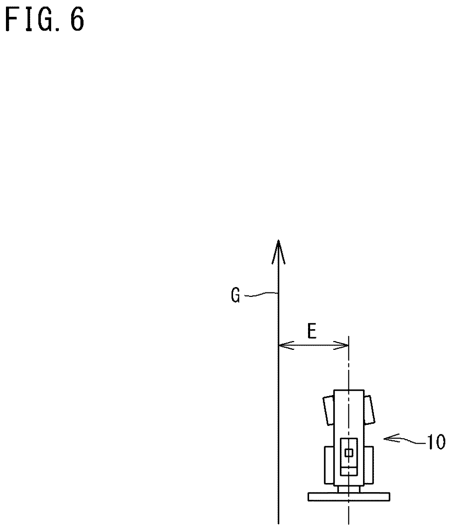

FIG. 6 is an explanatory diagram of the work vehicle 10 traveling by self-driving. The deviation E is a difference between the current position of the work vehicle 10 and the target route G, and is, for example, a distance. The driving control unit 73 determines whether the deviation E exceeds a threshold (step S103 in FIG. 5).

When the deviation E exceeds the threshold ("Yes" in step S103), the driving control unit 73 outputs a command signal to the control unit 72 for steering in order to reduce the deviation E. Upon receiving the command signal, the control unit 72 for steering changes a control parameter provided to the steering device 15 to change the steering angle (step S104). The steering angle is changed until the deviation E becomes equal to or less than the threshold.

In step S103, when the deviation E is equal to or less than the threshold, step S104 is skipped.

In the present embodiment (see FIG. 6), the steering device 15 is controlled based on the deviation E between the current position of the work vehicle 10 and the target route G. However, the steering device may be controlled based on a deviation in azimuth in addition to the deviation E. For example, the driving control unit 73 determines whether an angle difference between the direction of the work vehicle 10 identified by one or both of the positioning device 37 and the inertial measurement device 38 and the direction of the target route G exceeds a preset threshold. The angle difference is the deviation in azimuth. When the angle difference exceeds the threshold, a control parameter (for example, a steering angle) of the steering device 15 is changed according to the deviation.

Step S105 in FIG. 5 is a step of determining whether the driving control unit 73 has received an operation end command. The operation end command is issued, for example, in the following cases.
1) Stop of self-driving is instructed by a manager (user) by, for example, a remote operation.
2) The work vehicle 10 reaches the destination (end position).

When the driving control unit 73 does not receive an operation end command ("No" in step S105), the processing returns to step S101 and similar processing is performed thereafter. The driving control unit 73 repeats the operations of steps S101 to S105 until receiving the operation end command.

When detecting an obstacle in any step in the middle of the processing of steps S101 to S105 for self-driving, the driving control unit 73 can perform avoidance travel for avoiding the obstacle.

That is, while the work vehicle 10 travels, the cameras 35 capture images of the surrounding environment, and the LiDAR sensor 36 senses surrounding objects. The computing processing unit 74 detects an obstacle existing around the work vehicle 10 based on the detection results by the cameras 35 and the LiDAR sensor 36 and discriminates the type of the obstacle. The driving control unit 73 performs the avoidance travel according to the type of the obstacle.

When the avoidance travel is started, the work vehicle 10 travels along a travel route different from the target route G. As will be described later, the travel route changes according to the type of the obstacle.

FIG. 5 illustrates a case where actual avoidance travel is started after step S104. When the travel around the obstacle is completed, the driving control unit 73 returns the work vehicle 10 to the driving mode before the avoidance travel. That is, the driving control unit 73 causes the vehicle body 11 to travel such that the position of the work vehicle 10 returns to the target route G. Thereafter, processing of self-driving along the target route G (steps S101 to S105) is performed.

### [Avoidance Travel of Work Vehicle 10]

The driving control unit 73 can perform, for example, avoidance travel in which the vehicle body 11 travels around the detection target during, for example, self-driving according to the type of the detection target. The avoidance travel is travel in which, by outputting a steering signal to the steering device 15, the vehicle body 11 is caused to travel in one of the left-right directions in a state where there is a distance from the detection target to travel around the detection target. The distance between the position of the vehicle body 11 and the detection target is referred to as an "avoidance distance". The avoidance distance at the start position of the avoidance travel and the avoidance distance at the halfway position of the avoidance travel may be the same or different. The avoidance distance is also referred to as an avoidance margin.

The driving control unit 73 can perform a plurality of patterns of avoidance travel. The avoidance distance is set to any distance for the avoidance travel. The setting may be performed by the driving control unit 73 or may be performed by the computing processing unit 74.

When the avoidance distance is small, the timing of start of the avoidance travel against the detection target is delayed. That is, the avoidance travel is started at a position relatively close to the detection target.

When the avoidance distance is large, the timing of start of the avoidance travel against the detection target is early. That is, the avoidance travel is started at a position relatively far from the detection target.

The avoidance distance is changed according to the type of the detection target.

When the travel around the detection target is completed, the driving control unit 73 returns the work vehicle 10 to the driving mode before the avoidance travel. That is, the driving control unit 73 causes the vehicle body 11 to travel back to the target route set for self-driving. Thereafter, the self-driving along the target route is continued.

The avoidance travel may be automatically performed not only during the self-driving but also during the manual driving. That is, even when a driver sitting on the driver's seat 20 operates the steering wheel 30 to travel, if an obstacle is detected in the surroundings and avoidance travel is required, the driving control unit 73 may cause the avoidance travel to intervene in the manual driving. When the travel around the detection target is completed, the mode returns to the manual driving mode. Alternatively, an operation switch for canceling the avoidance travel is provided at the driver's seat 20, and the operation switch is operated by the driver to return the mode to the manual driving mode.

### [Specific Example of Avoidance Travel of Work Vehicle 10]

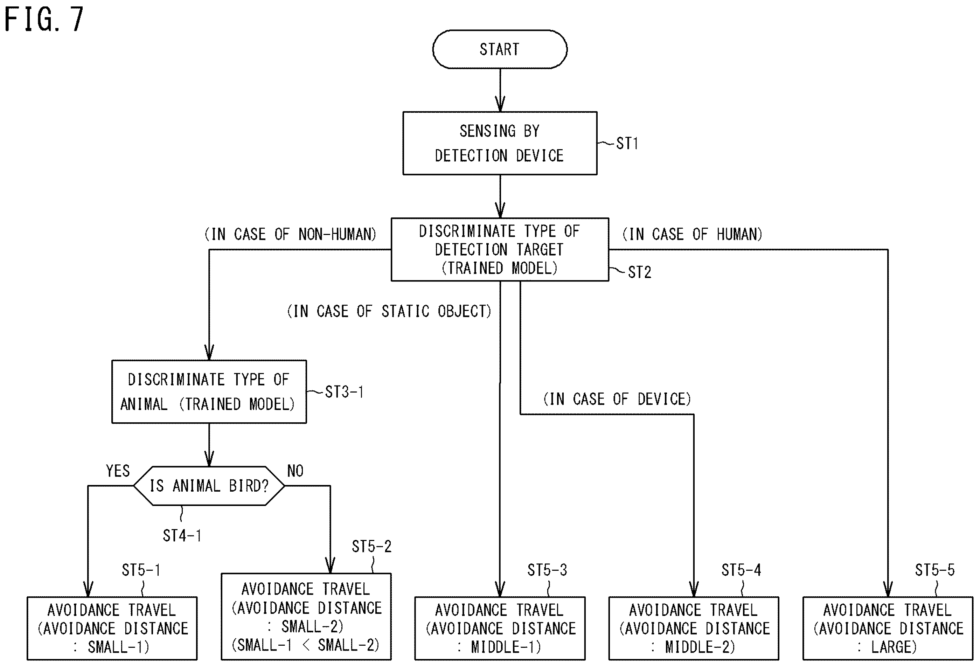

FIG. 7 is a flowchart for describing a case where avoidance travel intervenes in the middle of driving of the work vehicle 10. In the following description, a case where the work vehicle 10 travels mainly by self-driving will be described. A case where the work vehicle 10 travels mainly on a road (farm road) will be described.

During traveling of the work vehicle 10, the cameras 35 capture images of the surrounding environment to acquire image information from moment to moment. The LiDAR sensor 36 senses surrounding objects to acquire three-dimensional point group data from moment to moment (step ST1 in FIG. 7). The controller 70 acquires image information and three-dimensional point group data, which are outputs of the cameras 35 and the LiDAR sensor 36, respectively. The computing processing unit 74 detects an obstacle existing around the work vehicle 10 based on the detection results by the cameras 35 and the LiDAR sensor 36 and discriminates the type of an obstacle, if detected (step ST2 in FIG. 7).

For example, an obstacle is detected using the three-dimensional point group data, and the type of the obstacle is discriminated based on image information. The type of the obstacle is discriminated using the trained model as described above. The computing processing unit 74 may perform sensor fusion processing of fusing the image information captured by the cameras 35 and the three-dimensional point group data from the LiDAR sensor 36, detect an object to be an obstacle, and discriminate the type of the obstacle. The LiDAR sensor 36 is suitable for detecting an object having a feature in which the contour shape is irregular, but is not suitable for detecting an object if such a feature is small. Therefore, by fusing the image information obtained by the cameras 35 with the output of the LiDAR sensor 36, it is possible to perform discrimination with high accuracy.

As a result of the discrimination, in a case where the detection target is a non-human animal, the type of the animal is discriminated (step ST3-1 in FIG. 7). A case where the discrimination result indicates that the detection target is a "bird" ("Yes" in step ST4-1 of FIG. 7) will be described. In this case, the driving control unit 73 performs the avoidance travel in which the avoidance distance between the detection target (bird) and the start position of the avoidance travel is small (step ST5-1 in FIG. 7).

On the other hand, in a case where the discrimination result of the type of animal indicates that the detection target is "an animal other than a bird" ("No" in step ST4-1 in FIG. 7), the driving control unit 73 performs, against the detection target (animal other than a bird), avoidance travel with an avoidance distance (small-2) larger than the avoidance distance (small-1) in a case where the detection target is a "bird" (step ST5-2 in FIG. 7). However, the avoidance distance (small-2) in this case is smaller than that in a case where the detection target is a human.

Agility, a method of avoidance, and the like vary depending on the type of animal. Therefore, the driving control unit 73 performs different types of avoidance travel depending on the type of the animal. Here, the different types of avoidance travel are avoidance travel with different avoidance distances. The computing processing unit 74 can discriminate a bird as a type of the detection target (step ST4-1 in FIG. 7). Birds can fly off and escape quickly. Therefore, in a case where the detection target is a bird, the driving control unit 73 performs avoidance travel with a smaller avoidance distance than that in a case where the detection target is other than a bird (step ST5-1 in FIG. 7).

A case where the discrimination result indicates that the detection target is a human will be described (step ST2 in FIG. 7). The driving control unit 73 performs avoidance travel against the detection target (human) (step ST5-5). In this case, the avoidance distance is larger than that in a case where the detection target is an "animal other than a human".

This is because the driving control unit 73 performs avoidance travel in accordance with the habit of the animal other than a human. That is, animals other than a human may not escape even when the work vehicle 10 approaches to some extent, and may escape only when the work vehicle 10 reaches the immediate vicinity. Therefore, the work vehicle 10 performs avoidance travel in accordance with such animal habit. That is, in a case where the detection target is an animal other than a human, the driving control unit 73 performs the avoidance travel with the avoidance distance between the detection target and the start position of the avoidance travel smaller than that in a case where the detection target is a human.

A case where the result of the discrimination (step ST2 in FIG. 7) indicates that the detection target is a static object that does not perform avoidance behavior by itself, such as a plant and an artificial pillar will be described. The driving control unit 73 performs avoidance travel against the detection target (static object) with a smaller avoidance distance than that in a case where the detection target is a human (step ST5-3). However, the avoidance distance in this case is larger than that in a case where the detection target is an "animal other than a human". In a case where the detection target is an animal other than a human, the driving control unit 73 performs avoidance travel with a smaller avoidance distance than that in a case where the detection target is a static object as described above.

A case where the discrimination result (step ST2 in FIG. 7) indicates that the detection target is a device that can perform avoidance behavior by itself, such as another agricultural machine, an unmanned robot, an automobile, or the like will be described. The driving control unit 73 performs avoidance travel against the detection target (device) with a smaller avoidance distance than that in a case where the detection target is a human (step ST5-4). However, the avoidance distance in this case is larger than that in a case where the detection target is an "animal other than a human". In a case where the detection target is an animal other than a human, the driving control unit 73 performs avoidance travel with a smaller avoidance distance than that in a case where the detection target is a device described above.

### [Avoidance Travel including Alarming Operation]

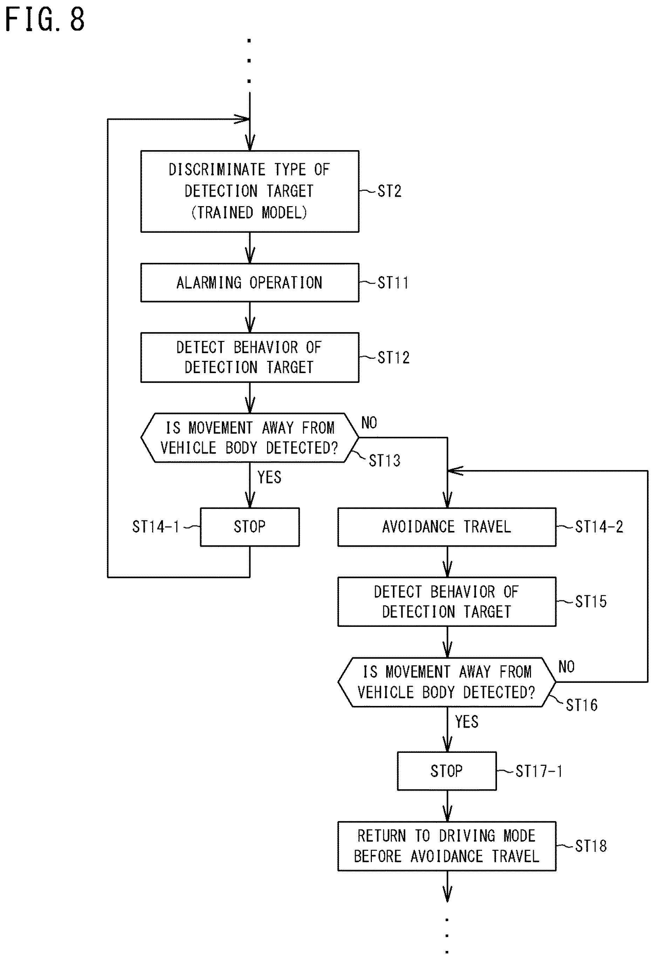

FIG. 8 is a flowchart for describing avoidance travel including an alarming operation. The computing processing unit 74 identifies the type of the detection target (step ST2 in FIG. 7 and FIG. 8). The control of the avoidance travel including the alarming operation can be added to both the "case of human" and the "case of animal other than human" in the flow of the avoidance travel (after step ST2 in FIG. 7) illustrated in FIG. 7.

In a case where the detection target is a human or an animal other than a human, the alarming device 19 performs an alarming operation (step ST11 in FIG. 8). In a case where the detection target is a static object such as a plant or a stationary object such as an artificial column, the alarming device 19 does not perform an alarming operation.

The alarming operation can cause a human and an animal other than a human to evacuate, and the avoidance travel can be needed less often.

The alarming operation is any one of generation of sound, generation of ultrasonic waves, and light emission, or a combination of at least two of them. The alarm to be repelled varies depending on the type of animal. Therefore, the alarming device 19 may perform the alarming operation while changing the type of the alarming operation according to the type of the animal.

After the alarming operation, the computing processing unit 74 detects the behavior of the detection target based on the detection result by the detection device such as the cameras 35 (step ST12 in FIG. 8). When detecting a behavior that the detection target moves away from the vehicle body 11 ("Yes" in step ST13 in FIG. 8), the computing processing unit 74 stops the alarming operation (step ST14-1 in FIG. 8). On the other hand, when the behavior of the detection target moving away from the vehicle body 11 is not detected ("No" in step ST13 of FIG. 8), the driving control unit 73 starts the avoidance travel at a predetermined timing.

During the avoidance travel (step ST14-2 in FIG. 8), the computing processing unit 74 detects the behavior of the detection target based on the detection result by the detection device such as the cameras 35 (step ST15 in FIG. 8). When detecting the behavior of the detection target moving away from the vehicle body 11 ("Yes" in step ST16 in FIG. 8), the computing processing unit 74 stops the started avoidance travel in the middle (step ST17-1 in FIG. 8), and returns to the driving mode before the avoidance travel (step ST18 in FIG. 8). That is, the computing processing unit 74 stops the avoidance travel in the middle, and causes the vehicle body 11 to travel so as to return to the route set for the self-driving from the state where the avoidance travel is stopped. Thereafter, the self-driving is continued.

As described above, in the case of the work vehicle 10 of the present embodiment, the alarming device 19 performs the alarming operation according to the type of the detection target (step ST11). When the behavior of the detection target moving away from the work vehicle 10 is not detected after the alarming operation is operated by the alarming device 19 ("No" in step ST 13), avoidance travel is performed. As described above, in a case where the detection target is an animal, the alarming operation is first performed. In a case where the alarm still does not cause the animal to escape, the avoidance travel is performed. As a result, waste avoidance travel of the vehicle body 11 can be reduced.

### [Deceleration Travel]

As described above, the driving control unit 73 has a function as a travel controller that enables avoidance travel. Further, the driving control unit 73 is capable of deceleration driving of the vehicle body 11 according to the type of the detection target in addition to the avoidance travel. The deceleration operation is performed in one or both of traveling immediately before the avoidance travel and traveling during the avoidance travel.

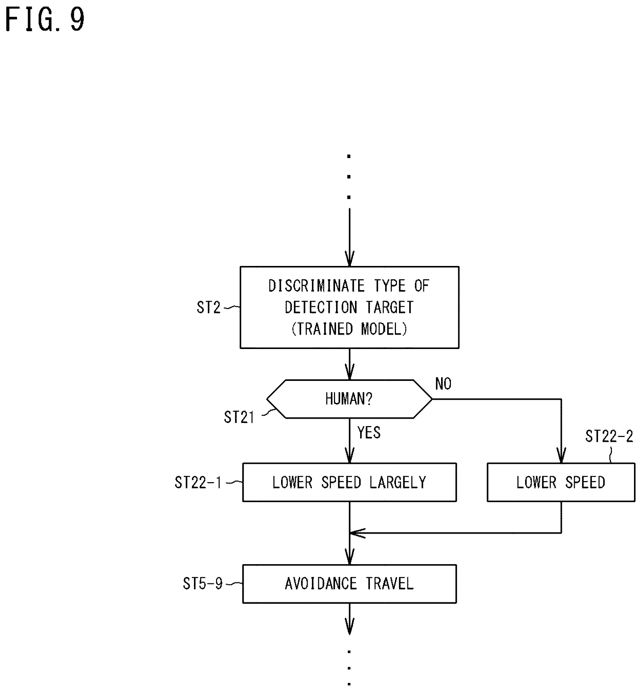

The deceleration operation will be specifically described. FIG. 9 is a flowchart for describing avoidance travel accompanied by deceleration driving. As described above, an animal other than a human may escape only after the work vehicle 10 reaches the immediate vicinity, and relatively quickly escape.

In a case where the detection target is a human ("Yes" in step ST21 in FIG. 9), the driving control unit 73 controls one or both of the prime mover 12 and the transmission 13 to cause deceleration driving, and then the vehicle body 11 travels at a low speed at a first speed (step ST22-1 in FIG. 9).

In a case where the detection target is an animal other than a human ("No" in step ST21 in FIG. 9), the driving control unit 73 controls one or both of the prime mover 12 and the transmission 13 such that the traveling speed after deceleration becomes higher than that in a case where the detection target is a human. In a case where the detection target is an animal other than a human, deceleration driving is performed, but traveling is performed at a speed higher than the first speed (step ST22-2 in FIG. 9).

Alternatively, in a case where the detection target is a human ("Yes" in step ST21 in FIG. 9), the driving control unit 73 performs the deceleration operation with the first acceleration that is a negative value having a large absolute value.

In a case where the detection target is an animal other than a human ("No" in step ST21 in FIG. 9), the driving control unit 73 controls one or both of the prime mover 12 and the transmission 13 such that the deceleration is smaller than that in a case where the detection target is a human. That is, in a case where the detection target is an animal other than a human, the deceleration operation is performed with an acceleration that is a negative value having a smaller absolute value than the first acceleration. Note that the speed of the vehicle body 11 after deceleration driving may be the same between the case where the detection target is a human and the case where the detection target is an animal other than a human.

Each control for the avoidance travel as described above may be performed when the work vehicle 10 travels on a road outside the field, or may be performed when the work vehicle travels in the farm field.

### [Example of Avoidance Travel]

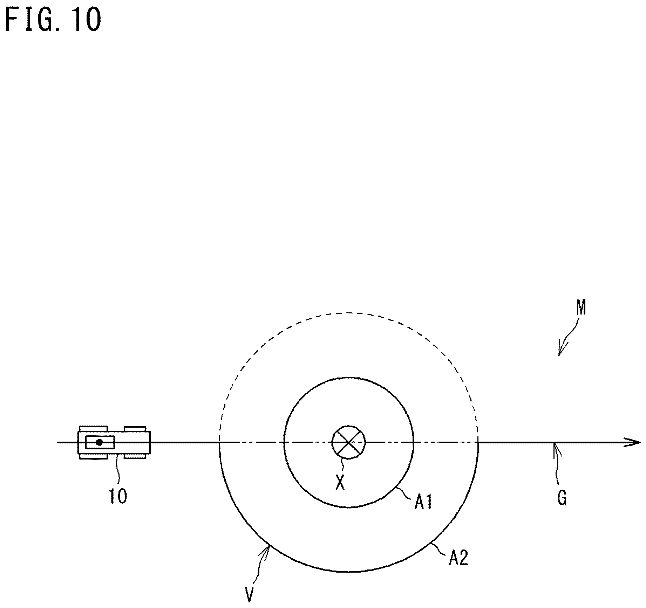

As described above, in the case of self-driving, the target route G is set in the map information stored in the storage 79. The work vehicle 10 travels such that the target route G matches the position of the vehicle body 11 obtained by the positioning device 37 including the GNSS receiver. FIG. 10 is an image diagram of map information M when the avoidance travel V is performed in the middle of the target route G. The work vehicle 10 travels along the target route G. In a case where the work vehicle 10 detects an obstacle X ahead of the target route G and avoidance travel V is needed, the driving control unit 73 (or the computing processing unit 74) sets an obstacle area A1 and a buffer area A2 on the map information M. The obstacle area A1 is an area centered on the detection target X. The buffer area A2 is a surrounding area of the obstacle area A1.

The driving control unit 73 performs avoidance travel such that the work vehicle 10 avoids at least the obstacle area A1. The driving control unit 73 may perform avoidance travel such that the work vehicle 10 avoids the obstacle area A1 and the buffer area A2.

In a case where the detection target that is the obstacle X is an animal other than a human, the obstacle area A1 is set to be narrow. In a case where the detection target that is the obstacle X is a human, the obstacle area A1 is set wider than that in a case where the detection target is an animal other than a human.

The buffer area A2 may have a constant width from the edge of the obstacle area A1, and may change similarly to the obstacle area A1.

As a result, in a case where the detection target (obstacle X) is an animal other than a human, the avoidance travel in which the avoidance distance between the detection target (obstacle X) and the start position of the avoidance travel becomes smaller than that in a case where the detection target (obstacle X) is a human is realized.

### [Work Vehicle 10 of Present Embodiment]

As described above, the work vehicle 10 of the present embodiment includes the vehicle body 11 and the detection device (the cameras 35 and the LiDAR sensor 36) that detects an obstacle around the vehicle body 11. The work vehicle 10 includes the computing processing unit 74 and the driving control unit 73. The computing processing unit 74 discriminates the type of the detection target based on the detection result by the detection device. The driving control unit 73 can perform traveling stop of the vehicle body 11 or avoidance travel to cause the vehicle body 11 to travel around the detection target according to the type of the detection target. In a case where the detection target is an animal other than a human, the driving control unit 73 performs the avoidance travel with the avoidance distance between the detection target and the start position of the avoidance travel smaller than that in a case where the detection target is a human.

According to the work vehicle 10 of the present embodiment, the timing of starting the avoidance travel is changed according to the detection target. That is, animals other than a human may not escape even when the work vehicle approaches to some extent, and may escape only when the work vehicle reaches the immediate vicinity. The work vehicle 10 performs avoidance travel in accordance with such animal habit. As a result, waste travel can be reduced.

### [Others]

The embodiment described above is merely an example in all respects and the invention is not limited to the embodiment. The scope of the present invention is defined by the claims rather than the embodiment, and includes all modifications within the scope equivalent to the configurations defined in the claims.

### REFERENCE SIGNS LIST

- 10: work vehicle
- 11: vehicle body
- 19: alarming device
- 35: camera (detection device)
- 36: LiDAR sensor (detection device)
- 73: control unit for driving control (travel controller)
- 74: control unit for computing processing (discrimination processor, behavior detector)

## Claims

1. A work vehicle comprising:
a vehicle body;
a detection device configured to detect an obstacle around the vehicle body;
a discrimination processor configured to discriminate a type of a detection target based on a detection result by the detection device; and
a travel controller configured to enable travel stop of the vehicle body or avoidance travel in which the vehicle body travels around the detection target according to the type of the detection target, wherein
the travel controller
performs, in a case where the detection target is an animal other than a human, avoidance travel with an avoidance distance between the detection target and a start position of the avoidance travel smaller than that in a case where the detection target is a human.

2. The work vehicle according to claim 1, wherein
the discrimination processor is capable of discriminating, as a type of a detection target, a static object that does not perform avoidance behavior by itself, and
the travel controller
performs, in a case where the detection target is an animal other than a human, avoidance travel with the avoidance distance smaller than that in a case where the detection target is the static object.

3. The work vehicle according to claim 1 or 2, wherein
the discrimination processor is capable of discriminating, as a type of a detection target, a device capable of performing avoidance behavior by itself, and
the travel controller
performs, in a case where the detection target is an animal other than a human, avoidance travel with the avoidance distance smaller than that in a case where the detection target is the device.

4. The work vehicle according to claim 1 or 2, wherein
the discrimination processor is capable of discriminating, as a type of a detection target, a type of an animal other than a human, and
the travel controller performs different types of avoidance travel according to a type of an animal.

5. The work vehicle according to claim 4, wherein
the discrimination processor is capable of discriminating, as a type of a detection target, a bird, and
the travel controller performs, in a case where the detection target is a bird, avoidance travel with the avoidance distance smaller than that in a case where the detection target is other than a bird.

6. The work vehicle according to claim 1, further comprising
an alarming device capable of performing an alarming operation according to a type of the detection target.

7. The work vehicle according to claim 6, further comprising
a behavior detector configured to detect behavior of the detection target based on a detection result by the detection device, wherein
the behavior detector stops one or both of the avoidance travel and the alarming operation when behavior of the detection target moving away from the vehicle body is detected.

8. The work vehicle according to claim 6 or 7, wherein
the travel controller performs the avoidance travel after the alarming device performs the alarming operation.

9. The work vehicle according to claim 1 or 2, wherein
the travel controller enables deceleration driving of the vehicle body according to a type of the detection target, and
in a case where the detection target is an animal other than a human, a traveling speed after deceleration is higher or a deceleration is smaller than that in a case where the detection target is a human.
